# EUROPÄISCHE PATENTANMELDUNG

(11) **EP 1 974 969 A2**
(43) Veröffentlichungstag der Anmeldung: **01.10.2008**
(21) Anmeldenummer: 08004521.4
(22) Anmeldetag: 12.03.2008
(51) Int. Cl.: B60J 7/20

(54) **Verdeckkastenanordnung für ein Cabriolet-Fahrzeug**

(30) Priorität: 31.03.2007 DE 102007015651; 31.03.2007 DE 102007015652
(71) Anmelder: Wilhelm Karmann GmbH, 49084 Osnabrück (DE)
(72) Erfinder: Helweg, Johannes, 49086 Osnabrück (DE)

(57) **Zusammenfassung**

Eine Verdeckkastenanordnung (27) für ein Cabriolet-Fahrzeug (10) enthält ein Bodenteil (20, 40), das an seinem frontseitigen Ende in einer Führungsanordnung (44, 45) zwischen zumindest zwei Positionen höhenverstellbar gelagert ist, und an seinem heckseitigen Ende (41) an zumindest zwei Positionen (52, 53) an der Fahrzeugkarosserie oder damit verbundenen Bauteilen verrastbar ist, wobei ein Sensor zum Erfassen der Position des heckseitigen Endes (41) des Bodenteils (20, 40) vorgesehen ist und zur Höhenverstellung des frontseitigen Endes ein Antrieb (54) vorgesehen ist, der mit einer Steuerung zusammenwirkt, derart, dass in Abhängigkeit von der erfassten Position des heckseitigen Endes des Bodenteils das frontseitige Ende (42) verfahren wird, so dass beide in der ersten Position oder beide in der zweiten Position sind.

## Beschreibung

Die Erfindung betrifft eine Verdeckkastenanordnung für ein Cabriolet-Fahrzeug, die einen Verdeckkasten ausbildet, in dem ein geöffnetes Verdeck des Cabriolet-Fahrzeugs abgelegt werden kann und die platzsparend und flexibel zum Abtrennen eines Verdeckaufnahmeraums von einem Gepäckaufnahmeraum eines Cabrioletfahrzeugs einsetzbar ist.

Verdeckkästen für Cabrioletfahrzeuge, insbesondere sogenannte Softtop- Cabrioletfahrzeuge, werden in der Regel derart gebildet, dass ein Abtrennelement von einem Gepäckraum oder Kofferraum einen Teil abtrennt, in den bei offenem Verdeck das Verdeck ablegbar ist. Bei geschlossenem Verdeck ist es wünschenswert, dass die Abtrennung des Verdeckkastens möglichst weitgehend aufgehoben werden kann, so dass der Gepäckraum bezüglich des Gepäckraums bei offenem und in dem Verdeckkasten abgelegtem Verdeck vergrößert ist.

Dabei strebt man danach, dass die Verdeckkastenanordnung in einem Zustand, in dem das Cabriolet-Verdeck geschlossen ist und somit nicht im Verdeckkasten untergebracht werden muss, möglichst platzsparend im Gepäckraum des Fahrzeugs untergebracht werden kann, insbesondere derart, dass der durch sie abtrennbare Raum vom Gepäckraum in diesem Fall zur Aufnahme von Gepäck möglichst vollständig zur Verfügung steht.

Aus der DE 10 2005 026 489 A1 ist ein Cabrioletfahrzeug mit einem in einem Verdeckkasten ablegbaren Softtop-Verdeck als Dach bekannt, bei dem ein wannenförmiger Bodenbereich eines Verdeckkastens um eine Höhendifferenz h auf- und ab- beweglich am Fahrzeug angebracht ist und zumindest teilweise entlang der Fahrzeuglängsrichtung verschiebbar ist. Wenn sich der Bodenbereich des Verdeckkastens in angehobener Stellung befindet, deckt der Bodenbereich einen Zwischenraum zwischen den Fahrzeughintersitzen und dem Dachbereich ab, so dass er als Hutablage wirkt. In der abgesenkten Stellung bildet er den Boden des Verdeckkastens. In jedem Fall ist jedoch der wannenförmige Bodenbereich vorhanden, so dass der Transport von großen und sperrigen Gegenständen auch bei geschlossenem Verdeck erschwert sein kann.

In der DE 10 2006 037 454.1 ist eine Verdeckkastenanordnung beschrieben, bei der eine starre Bodenplatte des Verdeckkastens entlang von Führungsschienen, die am frontseitigen Endbereich des Gepäckraums an der Fahrzeugkarosserie, beispielsweise an einem Überrollschutzsystem, angebracht sind, vertikal verfahrbar ist. Mit der starren Bodenplatte ist gelenkig eine Abschlusswand verbunden, die den heckseitigen Abschluss der Verdeckwanne bildet. Wenn die Bodenplatte in die angehobene Stellung verfahren ist, ist sie weitgehend angrenzend an einen Gepäckraumdeckel und die Abschlusswand liegt parallel zu ihr. In der abgesenkten Stellung der Bodenplatte ist die Abschlusswand weitgehend senkrecht zur Bodenplatte, so dass mit dieser gemeinsam ein Verdeckaufnahmeraum für das geöffnete Verdeck gebildet wird.

Aus der DE 196 36 027 C1 ist eine Trennwand zum Unterteilen eines Heckstauraums eines Fahrzeugs in einen Gepäckraum und einen Verdeckkasten bekannt, wobei die Trennwand aus einem Rollo gebildet wird, das aus einer an einer Gepäckraumwand fest montierten Kassette ausziehbar ist.

Aus der DE 199 39 505 A1 ist eine Verdeckkastenanordnung bekannt, bei der ein Verdeckkasten durch mehrere zueinander bewegliche, in Fahrzeugslängsrichtung aufeinanderfolgende Bodenwandteile gebildet wird. Ein vorderer Teil der Trennvorrichtung zwischen Gepäckraum und Verdeckaufnahmeraum ist zumindest Bereichsweise flexibel ausgebildet und mit seinem vorderen Endbereich gegenüber der Karosserie höhenverlagerbar gehalten. Die anderen Bauteile sind als starre Platten gebildet. Der hintere Teil ist ortsfest, jedoch schwenkbar gehalten.

Aus der EP 0 958 955 B1 ist schließlich eine Trennvorrichtung zum Ausbilden eines Verdeckkastens und zum Abtrennen des Verdeckkastens gegenüber einem Gepäckraum bekannt, die eine sich im Wesentlichen horizontal erstreckende, zwischen seitlichen Rahmenteilen gehaltene und zwischen einer oberen und einer unteren Endstellung vertikal verschiebbare textile Bespannung umfasst. Die Textilbahnen sind wannenförmig gespannt. Die textile Bespannung ist soweit dehnbar, dass sie eine Längendifferenz bei einem Übergang zwischen einer Verdeckaufnahmestellung und einer Gepäckaufnahmestellung kompensieren kann. In der Verdeckaufnahmestellung ist die Textilbahn in einer abgesenkten Position gegenüber einer Gepäckaufnahmestellung, in der Gepäckaufnahmestellung in einer angehobenen Position frontseitig an der Karosserie bzw. einem Rahmen und zwischen den Positionen verstellbar gelagert. Die textile Bespannung bildet in beiden Stellungen eine Wannenform, indem sie einen Bodenbereich und einen heckseitigen Seitenbereich definiert und um entsprechende Umlenkrollen geführt ist. Lediglich die sich verändernde Länge des heckseitigen Seitenbereichs wird durch die Elastizität oder Längenkompensationsfunktion der textilen Bespannung kompensiert.

Aus der DE 196 36 027 C1 und der DE 10 2004 031 962 A1 sind jeweils Verdeckkastenanordnungen bekannt, die einen Rollomechanismus beinhalten. Das Rollo ist aus einem Rollogehäuse jeweils ein- bzw. ausziehbar, wobei es durch eine Wickelfeder in die eingezogenen Lage vorbelastet ist. Das Rollogehäuse erstreckt sich in Breitenrichtung des Heckraums und ist fest und gegenüber der Karosserie unverrückbar am frontseitigen Bereich des Kofferraums angebracht. Wird das Rollo ausgezogen, so wird es zunächst entlang einer seitlichen Führung, die im Wesentlichen parallel zur Fahrzeuglängsrichtung und horizontal verläuft, geführt. Im Heckbereich spannt es von einem Ende der Führung zu einem Einhängungswiderlager, in das der Fallstab des Rollos eingehängt werden kann. Im eingehängten Zustand wird eine wannenartige Aufnahme gebildet, in die das Verdeck abgelegt werden kann. Bei der DE 196 36 027 C1 wird das Rollo in einem ersten Bereich waagrecht aus der Kassette ausgezogen und entlang der Gepäckraumwand geführt, dann um eine Umlenkeinrichtung, die als mit der Rollobahn mitbewegter Umlenkstab gebildet ist, umgelenkt und nach oben geführt, so dass durch die Rollobahn ein Verdeckraum von einem Gepäckraum abgetrennt wird. Wird kein Verdeckaufnahmeraum gebraucht, kann das Rollo vollständig in seine Kassette zurückgezogen werden, so dass dann der vollständige Heckraum als Gepäckraum zur Verfügung steht.

Es ist Aufgabe der Erfindung, eine Verdeckkastenanordnung für ein Cabriolet-Fahrzeug zu schaffen, die platzsparend aufgenommen werden kann, wenn kein Verdeckkasten ausgebildet werden soll, und die Bedienungssicherheit bietet.

Diese Aufgabe wird mit einer Verdeckkastenanordnung für ein Cabriolet-Fahrzeug mit den Merkmalen des Anspruchs 1 gelöst. Bevorzugte Ausführungsformen sind in den abhängigen Ansprüchen angegeben.

Der Erfindung liegt der Gedanke zugrunde, eine Verdeckkastenanordnung mit einem vertikal verschiebbaren Bodenteil zu gestalten, das zwischen zumindest zwei Positionen, in denen es feststellbar ist, höhenverstellbar gelagert ist. Insbesondere sind sowohl das frontseitige Ende des Bodenteils als auch das heckseitige Ende jeweils in den zumindest zwei Positionen unabhängig voneinander verrastbar. Um eine Bedienungsfehlerfreiheit zu erzielen, ist ein Sensor zum Erfassen der Position des heckseitigen Endes des Bodenteils vorgesehen, der beim Erfassen einer abweichenden Position zwischen dem heckseitigen Ende und dem frontseitigen Ende des Bodenteils eine Verschiebung des frontseitigen Endes in die dem heckseitigen Ende entsprechende Position mittels eines Antriebs auslöst. Dadurch wird das Bodenteil im Wesentlichen waagerecht gehalten und kann in einer Position beispielsweise eine Hutablage oder einen Sichtschutz in dem Kofferraum definieren und in der anderen Position, die gegenüber der ersten Position tiefer liegt, einen Verdeckkasten zur Aufnahme eines Cabriolet-Verdecks definieren.

Vorzugsweise ist das Bodenteil in Fahrzeuglängsrichtung längenveränderlich, so dass einerseits Längenunterschiede ausgeglichen werden können, die zwischen der angehobenen und der abgesenkten Position aufgrund von z.B. Längendifferenzen des Gepäckraums entstehen und andererseits das Bodenteil auch diagonal gespannt werden kann, so dass beispielsweise das heckseitige Ende in die tiefere Position gebracht werden kann und dort verrastet werden kann, wenn das frontseitige Ende in der angehobenen Position ist.

Vorzugsweise ist das Bodenteil durch ein in eine Rollokassette aufwickelbares Rollo gebildet, wobei die Rollokassette das frontseitige Ende des Bodenteils bildet und fest mit Führungskulissen verbunden ist, die beispielsweise in vertikal verlaufenden Führungsschienen, die am Fahrzeug befestigt sind, verschiebbar ist. Beispielsweise können solche Führungsschienen an einem Überrollschutzsystem des Cabriolet-Fahrzeugs oder an einer Trennwand zwischen dem Fahrzeuginnenraum und dem Gepäckraum montiert sein. Dies bietet den Vorteil, dass das Rollo auch vollständig in die Rollokassette aufgewickelt sein kann, indem beispielsweise das Rollo stets in die aufgewickelte Position durch eine Feder in der Rollokassette vorbelastet ist, so dass es in diesem Zustand nahezu keinen Raum des Gepäckraums beansprucht und damit der gesamte Gepäckraum, einschließlich des für einen Verdeckkasten abtrennbaren Teils, zur Beladung von Gepäck zur Verfügung steht.

Indem das Rollo höhenverstellbar angeordnet wird, werden nicht nur bei ausgezogenem Rollo ein Verdeckkastenaufnahmeraum und ein Verdeckkasten durch das Rollo definiert und sind bei eingezogenem Rollo der Kofferraum und Gepäckraum maximal, sondern es wird zusätzlich bei ausgezogenem und in die angehobene Stellung bewegtem Rollo und Rollokassette eine Hutablage vorgesehen wird. Wenn das Rollo eingezogen ist, ist sein Platzbedarf im Gepäckraum des Fahrzeugs minimal, so dass der Transport von großen und sperrigen Gegenständen möglich ist.

Insbesondere wird dies dadurch erreicht, dass eine Rollokassette, in der beispielsweise durch eine Wickelfeder ein Rollo in die aufgewickelte Position vorbelastet untergebracht ist, vertikal verschiebbar an einem Trennbereich zwischen dem Fahrzeuginnenraum und dem Gepäckraum vorgesehen ist. Beispielsweise kann nach einer bevorzugten Ausführungsform die Rollokassette am Überrollschutzsystem eines Cabrioletfahrzeugs festlegbar sein. Gleichzeitig ist das heckseitige Ende des Rollos im ausgezogenen Zustand ebenfalls an zwei vertikal unterschiedlichen Positionen der Fahrzeugkarosserie bzw. einem damit verbundenen Bauteil, wie z.B. dem Stoffhaltebügel, verbindbar, so dass das Rollo sich im Wesentlichen in waagrechter Richtung in Einbaulage in zwei unterschiedlichen vertikalen Positionen erstrecken kann. Dies bedeutet, dass der Verdeckkastenboden, der im Wesentlichen durch das Rollo und die Rollokassette gebildet wird, höhenverstellbar gehalten ist. Eine Verstellung bzw. eine Platzbedarfsminimierung in horizontaler Richtung wird durch die Rollofunktion erreicht.

Vorzugsweise ist das freie Ende des Rollos, wenn es gegen die Vorbelastungskraft einer Federeinrichtung oder ähnlichem aus der Rollokassette ausgezogen ist, am frontseitigen Endbereich eines Stoffhaltebügels festlegbar. Beispielsweise kann das Rollo durch ein textiles Material gebildet sein, an dessen freiem Ende, das heißt dem nicht mit der Rollokassette verbundenen Ende, ein Fallstab vorgesehen ist, der gleichzeitig als Griffbereich dient. Dieser Fallstab kann an seinen Enden beispielsweise in hakenförmige Aufnahmen am Stoffhaltebügel eingehakt werden, wodurch das Rollo in der ersten Position gehalten wird, in der es in der vertikal oberen Position in den Führungen ist und eine Hutablage definiert.

Vorzugsweise sind in den Aufnahmen Sensoren zum Erfassen des Vorhandenseins des heckseitigen Endes des Bodenteils oder Rollos vorgesehen. Diese Sensoren können nach einer bevorzugten Ausführungsform durch Microschalter oder Magnetschalter gebildet sein.

Entsprechende hakenförmige Aufnahmen können nach einer bevorzugten Ausführungsform auch an der Fahrzeugstruktur, insbesondere Seitenwände des Kofferraums oder Gepäckraums bildenden Fahrzeugstrukturteilen, wie einem Seitenfensterrahmen, vorgesehen sein, in die das Rollo, insbesondere sein Fallstab oder eine ähnliche Befestigungseinrichtung an seinem heckseitigen und seitlichen Ende, einhakbar ist, wenn das Rollo in der zweiten Position festgelegt werden soll, in der es bezüglich der ersten Position vertikal abgesenkt ist. In dieser zweiten Position definiert das Rollo die Bodenwand eines Verdeckkastens.

Zum Bewegen des Rollos aus der Rollokassette ist vorzugsweise der freie Teil des Rollos mit einem Griffbereich, beispielsweise gebildet durch einen Fallstab, versehen.

Die Führungsanordnung für die Rollokassette ist nach einer bevorzugten Ausführungsform durch zwei parallele vertikale Schienen gebildet, in denen entsprechende Führungselemente, die mit der Rollokassette fest verbunden sind, gleiten. Die Verschiebung der Rollokassette in den Führungsschienen kann entweder manuell oder aber durch einen Elektromotor, der bevorzugter Weise mit einer Steuerung verbunden ist, geschehen. Die Führungsschienen können als säulenartige Konsolen an der Trennwand, die den Fahrzeuginnenraum vom Gepäckraum abtrennt, oder am Überrollschutzsystem des Cabrioletfahrzeugs befestigt sein. Beispielsweise können in ihnen schlittenartig ausgebildete Führungselemente, die mit der Rollokassette fest verbunden sind, gleiten. Wenn diese elektromotorisch angetrieben werden, können beispielsweise Steigungsseile innerhalb der Konsolen vorgesehen sein, die mit einem Antriebsritzel des Elektromotors kämmen und derart in Hülsen geführt sind, dass sie sowohl Schub- als auch Zugkräfte übertragen können. Beispielsweise kann durch eine Wendel an den Seilen ein formschlüssiger Eingriff mit einer Verzahnung eines Antriebsritzels des Elektromotors erzielt werden. Diese Führungssteigungsseile sind mit den Führungselementen an der Rollokassette fest verbunden.

Nach einer bevorzugten Ausführungsform ist die Steuerung mit einer Steuerung zum Öffnen und Schließen des Verdecks derart gekoppelt, dass das frontseitige Ende des Bodenteils nur dann in die angehobene Position, in der eine Verdeckaufnahme im Verdeckaufnahmeraum nicht möglich ist, verfahren wird, wenn das Verdeck geschlossen ist. Dies schließt aus, dass trotz im Verdeckraum abgelegtem Verdeck bei einer versehentlichen Einrastung des Bodenteils oder eines anderen Elements in den oberen Aufnahmen das frontseitige Ende und damit das gesamte Bodenteil verfahren wird. Weiter kann zusätzlich die Steuerung für das Verfahren des frontseitigen Endes des Bodenteils derart mit der Steuerung für das Öffnen und Schließen des Verdecks zusammenwirken, dass ein Verdeck nur geöffnet werden kann, wenn sich sowohl das frontseitige Ende als auch das heckseitige Ende des Bodenteils in einer abgesenkten Position, in der der Verdeckaufnahmeraum definiert wird, befinden.

Nach einer bevorzugten Ausführungsform ist eine Steuerung derart vorgesehen, dass die Verschiebung der Rollokassette in den Führungsschienen oder ähnlichem automatisch ausgelöst wird, wenn das heckseitige Ende des Rollos in entsprechende Aufnahmen an der Fahrzeugkarosserie bzw. dem damit verbundenen Element, wie z.B. dem Stoffhaltebügel, eingesetzt wird. Beispielsweise kann eine solche automatische Verschiebung dann ausgelöst werden, wenn sich die Rollokassette in der ersten Position befindet (in der angehobenen Position) und das Rollo mit der Fallstange an Ausnehmungen an den Seitenwänden des Gepäckraums (entsprechend der zweiten Position) eingehakt wird. Ist umgekehrt die Rollokassette in der zweiten Position (tiefe Position) ist vorzugsweise die Steuerung derartig mit Sensoren am Verdeckgestänge gekoppelt, dass sich auch bei einem Einhaken des Rollos in der oberen Position die Rollokassette nur verschiebt, wenn das Verdeck geschlossen ist, das heißt das Verdeck nicht im Verdeckkasten abgelegt ist. Zum Erzielen dieser Funktionalität ist vorzugsweise das Rollo derart elastisch oder so in seiner Länge bemessen, dass es eine Strecke überspannen kann, die von beispielsweise der ersten Position der Rollokassette zur zweiten Position zum Festlegen des hinteren Endes des Rollos reicht, also diagonal im Verdeckkasten verläuft.

Nachfolgend wird die Erfindung beispielhaft anhand der beigefügten Figuren beschrieben, in denen:
- Fig. 1: eine Seitenansicht eines vier- oder fünfsitzigen Cabriolet-Fahrzeugs mit teilweise geöffnetem Dach ist;
- Fig. 2: eine schematische Seitenansicht von für die Erfindung relevanten Teilen bei geöffnetem Verdeck ist;
- Fig. 3: die Verdeckkastenanordnung in der Verdeckaufnahmestellung, in der ein Verdeckkasten definiert wird, zeigt;
- Fig. 4: die Verdeckkastenanordnung in der Stellung bei geschlossenem Verdeck und in der Funktion als Sichtschutz oder Hutablage zeigt; und
- Fig. 5: ein Beispiel für einen Antriebsmechanismus für das frontseitige Ende des Bodenteils der Verdeckkastenanordnung zeigt.

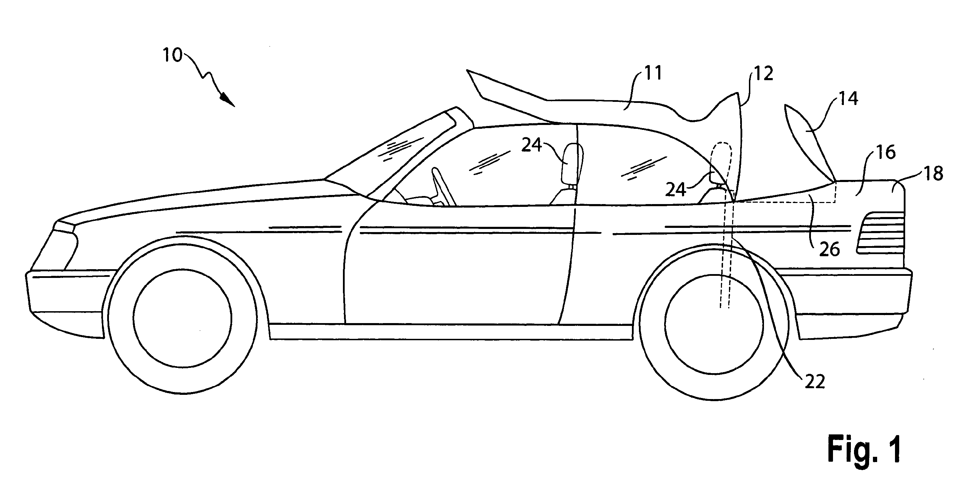

Fig. 1 zeigt eine Seitenansicht eines Cabriolet-Fahrzeugs 10 mit vier Sitzen. Das Verdeck 11 ist teilweise geöffnet, wobei ein hinterer Spannbügel oder Verdeckstoffhaltebügel 12 angehoben ist, so dass ein Verdeckkastendeckel 14 öffenbar ist und einen Zugang zu einem Verdeckaufnahmebereich 26 eines im Heckbereich des Fahrzeugs ausgebildeten Gepäckraums 16 freigibt, der von hinten her durch eine öffenbare Heckklappe 18 zugänglich ist.

Der Zugang in den Gepäckraum 16 durch die vom Verdeckkastendeckel 14 freigegebene Öffnung ist durch eine Trennwand 20 verschlossen, die aus einer angehobenen Stellung (Stellung gemäß Fig. 1) in eine abgesenkte Stellung bewegbar ist, in der sie einen Verdeckaufnahmebereich 26 vom zugänglichen Nutzvolumen des Gepäckraums 16 für die Beladung von Gepäck abtrennt. Der Verdeckkastendeckel 14 ist, wie dargestellt, durch Verschwenken in Uhrzeigerrichtung zu öffnen, in dem er an seinem heckseitigen Ende an der Fahrzeugkarosserie angelenkt ist. Die Heckklappe 18 wird durch Verschwenken in Richtung gegen den Uhrzeigersinn geöffnet, indem sie an ihrem frontseitigen Ende an der Fahrzeugkarosserie angelenkt ist.

Der Fahrzeuginnenraum ist vom Gepäckraum 16 durch eine Heckwand 22 abgetrennt, in der eine Durchladeöffnung ausgebildet sein kann, durch die hindurch große Gepäckstücke in dem Gepäckraum 16 aufgenommen werden können, die bis in den Innenraum des Fahrzeugs reichen. Im Bereich oder an der Trennwand 20 können in Fig. 1 nicht dargestellte säulenartige Konsolen 34 befestigt sein, in denen senkrechte Arme von Überrollbügeln 30 bewegbar sind, die im Falle eines Unfalls oder Aufpralls nach oben über das Niveau von Kopfstützen 24 hinausfahren, um Fahrzeuginsassen im Falle eines Überschlags zu schützen.

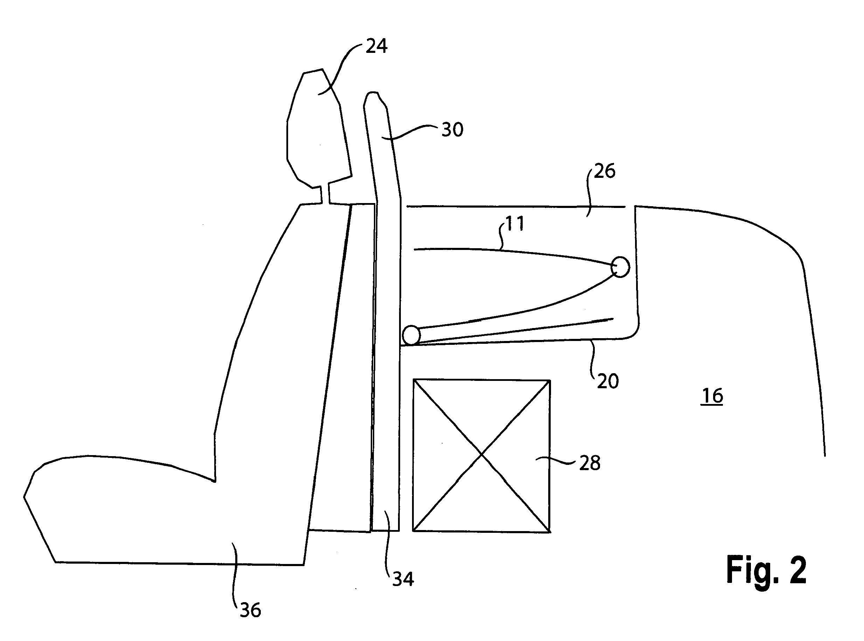

Fig. 2 zeigt Teile eines zwei- oder viersitzigen Cabriolet-Fahrzeugs mit in einem Verdeckaufnahmebereich 26 des Gepäckraums 16 zusammengelegten Verdeck 11, wobei die Trennwand 20 abgesenkt ist und das zusammengelegte Deck 11 von in dem Gepäckraum 16 verstautem Gepäck 28 schützt.

Weiter sichtbar ist auch Überrollbügel 30, der in säulenartigen Konsolen 34 auf und ab bewegbar ist. Der mit der Kopfstütze 24 dargestellte Fahrzeugsitz 36 kann ein Fahrersitz oder ein Rücksitz sein.

Diese Elemente, wie sie bisher erläutert wurden, sind an sich bekannt und werden daher hinsichtlich ihrer Einzelheiten und Funktionen nicht genauer beschrieben.

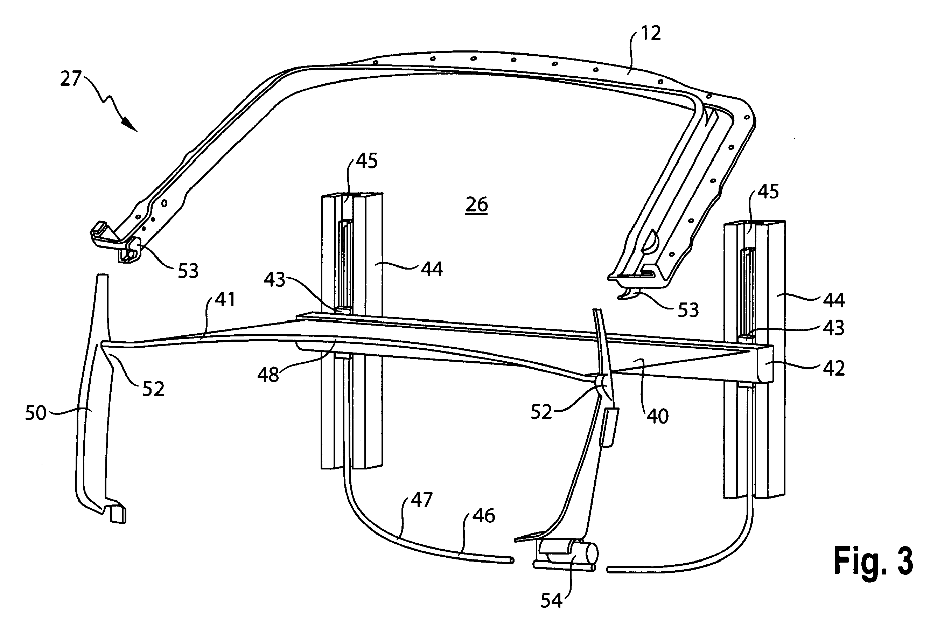

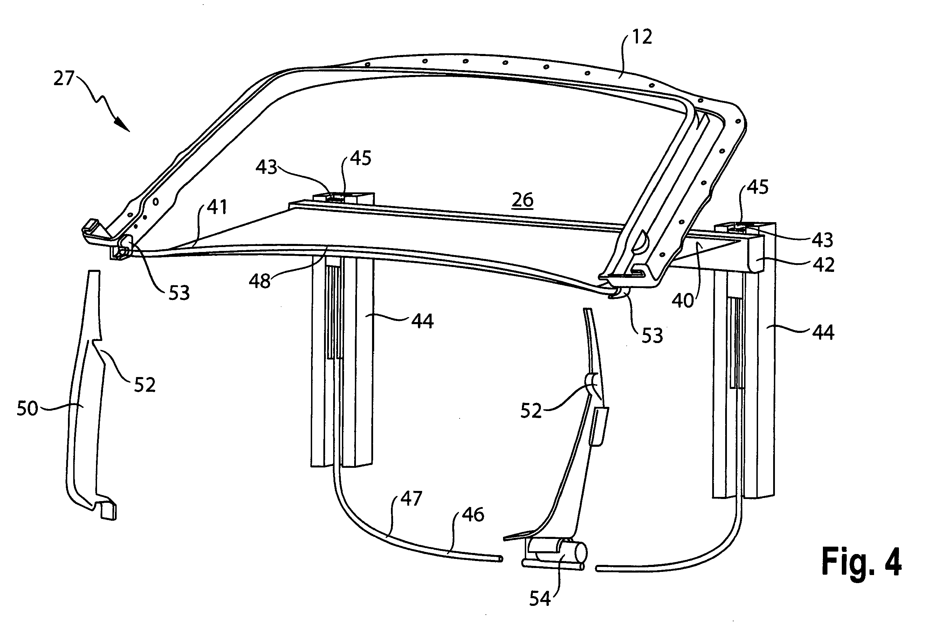

Fig. 3 und 4 zeigen die Verdeckkastenanordnung 27 gemäß der Erfindung in der Verdeckaufnahmeposition (Fig. 3), in der ein Verdeckaufnahmebereich 26 oder Verdeckkasten vom Gepäckraum 16 abgetrennt wird, durch die dem Bodenteil entsprechende Trennwand 20, und in der angehobenen Position (Fig. 4), in der die Trennwand 20 bzw. das Bodenteil des Verdeckkastens 26 als Sichtschutz in den Gepäckraum oder als Hutablage dient.

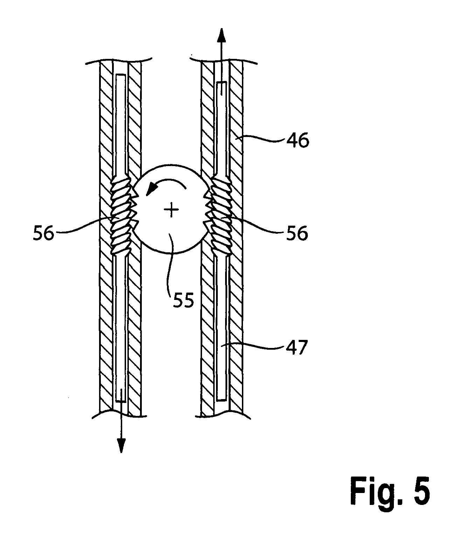

Die Trennwand 20 bzw. das Bodenteil ist in der in Fig. 3 und 4 dargestellten Ausführungsform durch ein Rollo 40 gebildet, das aus textilem oder folienartigem Material, gegebenenfalls mit Eigensteifigkeit, geformt ist und in eine Rollokassette 42 ein- und ausziehbar gehalten ist. Die Rollokassette 42 beinhaltet weiter eine Aufwickeleinrichtung (nicht dargestellt) für das Rollo 40, so dass das Rollo 40 in die aufgewickelte Position, in der es in der Rollokassette 42 aufgenommen ist, vorbelastet ist. Die Rollokassette 42 ist fest mit Führungskulissen 43, die in entsprechenden Ausnehmungen 45 in Führungsschienen 44 verschiebbar gelagert sind, verbunden. Die Führungskulissen 43 ihrerseits sind fest mit Steigungsseilen 47 verbunden, die in Hülsen 46 (siehe Fig. 5) verschiebbar geführt sind. Die Führungsschienen 44 sind beispielsweise fest an der Konsole 34 des Überrollbügels 30 oder an der Heckwand 22 angebracht. Die Versschieberichtung ist im Wesentlichen vertikal in Einbaulage. Somit kann die Rollokassette 42 eine erste angehobene Position und eine zweite relative dazu abgesenkte Position einnehmen. In diesen Positionen sind entweder separate an sich bekannte Arretiereinrichtungen vorgesehen oder es ist eine Bewegungseinrichtung vorgesehen, die so gestaltet ist, dass in diesen Positionen die Rollokassette 42 feststellbar ist.

Dadurch, dass die Steigungsseile 47 innerhalb von Hülsen 46 geführt sind, können mittels der Steigungsseile 47 sowohl Zugkräfte als auch Schubkräfte übertragen werden, so dass die mit ihnen fest verbundenen Führungskulissen 43 und damit die Rollokassette 42 auf und ab bewegt werden können. Dies bedeutet, dass durch eine Bewegung der Steigungsseile 47 die Rollokassette 42 und damit das frontseitige Ende des Rollos 40 in der Höhe justiert werden können und insbesondere zwischen der in Fig. 3 dargestellten tiefen Position, in der über dem Rollo 40 ein Verdeckaufnahmebereich 26 definiert wird, und der in Fig. 4 gezeigten angehobenen Position bewegt werden können.

Das Rollo 40 ist an seinem heckseitigen Ende mit einem Fallstab 41 und einem Griff 48 versehen. Ergreift man das Rollo 40 am Griff 48 kann es aus der Rollokassette 42 ausgezogen werden. Damit es im ausgezogenen Zustand gegen die in der Rollokassette 42 vorbelastende Kraft der Aufwickelfeder bleibt, muss das Rollo 40 an seinem heckseitigen Ende, beispielsweise mittels des Fallstabs 41, in hakenartige Aufnahmen 52, die beispielsweise am Seitenteilen 50 des Gepäckraums 16 oder an Scheibenrahmen einer Heckscheibe vorgesehen sind, gehalten werden. Entsprechende hakenartige Aufnahmen 53 sind auch am Verdeckstoffhaltebügel 12 vorgesehen, wenn das Rollo 40 in seiner angehobenen Position ausgezogen gehalten werden soll (siehe Fig. 4). Somit sind Aufnahmen für den heckseitigen Endbereich des Rollos 40 entsprechend den zwei Verstellpositionen der Rollokassette 42 an mindestens zwei vertikalen Positionen an der Fahrzeugkarosserie oder damit verbundenen Teilen gebildet, so dass sich das Rollo im Wesentlichen waagrecht erstreckt, wenn sowohl die Rollokassette 42 als auch das heckseitige Ende des Rollos 40 beide in entweder der ersten oder zweiten Position festgelegt sind.

Vorzugsweise sind an diesen Aufnahmen zur Aufnahme des heckseitigen Endes des Rollos 40 nicht gezeigte Sensoren vorgesehen, die erfassen, ob der Fallstab 41 präsent ist. Wenn die Position der Rollokassette 42 nicht mit der Position des Fallstabs 41 übereinstimmt, veranlasst eine mit diesen Sensoren verbundene Steuerung, dass die Rollokassette 42 in die zweite Position, das heißt die in Fig. 3 dargestellte abgesenkte Position, automatisch bewegt wird.

Wie in Fig. 4 dargestellt ist, sind entsprechende Aufnahmen, gegebenenfalls ebenfalls gekoppelt mit Sensoren, auch am Verdeckstoffhaltebügel 12 geformt. Der Fallstab 41 kann in die dort gebildeten Aufnahmen 52 manuell eingesetzt und dort gehalten werden, was der angehobenen Position des Rollos 40 entspricht, in der das ausgezogene Rollo 40 eine Hutablage definiert. Die Rollokassette 42 ist in dieser Position ebenfalls angehoben, gegebenenfalls durch elektromotorische Betätigung, die automatisch in Abhängigkeit von der mittels in den Aufnahmen 52 vorgesehener Sensoren erfassten Position gesteuert wird. Vorzugsweise ist die Steuerung in diesem Fall ferner derart, dass die Rollokassette 42 nur dann aus der in Fig. 3 dargestellten Position in die in Fig. 4 gezeigte Position verfahren, das heißt angehoben wird, wird, wenn gleichzeitig erfasst wird, dass das Verdeck geschlossen ist, das heißt nicht im Verdeckaufnahmeraum 26 abgelegt ist, so dass eine Betätigung, die zu Beschädigung von Bauteilen führen könnte, auch bei einem fehlerhaften Einlegen des Fallstabs 41 in die Aufnahmen 52 ausgeschlossen ist.

Vorzugsweise ist die Anordnung bezüglich einer Fahrzeuglängsmittelebene jeweils symmetrisch gestaltet, so dass ein Verkeilen oder Verkanten der Bewegungsmechanismen vermieden wird.

In einer bevorzugten Ausführungsform ist sowohl die Austrittsöffnung an der Rollokassette 42 als auch der freie Endbereich des Rollos 40 in der Richtung quer zur Ausziehrichtung der Rollos 40 konturiert, bevorzugter Weise gebogen, so dass in der in Fig. 3 dargestellten Position der durch das Rollo 40 als Bodenteil definierte Verdeckaufnahmeraum 26 möglichst genau der Form des Verdecks entspricht und keinen unnötigen Raum vom Gepäckraum 16 beansprucht.

Ferner enthält die Verdeckkastenanordnung 27 einen Elektromotor 54 als Antrieb für das frontseitige Ende des Rollos 40. Der Elektromotor 54 treibt über das Antriebsritzel 55 (siehe Fig. 5) die Bewegung der Steigungseile 47 an, mit denen das Antriebsritzel 55 in einem gewendelten Bereich 56 der Steigungsseile 47 kämmt. Die Steigungsseile 47 führen jeweils von der ihnen zugeordneten Führungskulisse 43 zu einem Antriebsritzel 55 eines Elektromotors 54, und zwar derart, dass jeweils eines der Steigungsseile 47 auf einer von zwei in Durchmesserrichtung gegenüberliegenden Seiten mit dem Antriebsmittel 55 kämmt.

Wird beispielsweise das Antriebsritzel 55 durch den Elektromotor in die Richtung gegen den Uhrzeigersinn in Fig. 5 gedreht, so bewegt sich das rechte Steigungsseil 47 nach oben, während sich das linke Steigungsseil 47 nach unten bewegt, so dass beide Steigungsseile die mit ihnen verbundene Kulisse 43 und damit die Rollokassette 42 in der gleichen Richtung, d.h. nach oben oder nach unten, bewegen.

Der Elektromotor 54 ist mit einer nicht dargestellten Steuerung verbunden. Die Steuerung ihrerseits ist wiederum mit Sensoren verbunden, beispielsweise Magnetsensoren oder Microschaltern, die in den Aufnahmen 53 und 52 vorgesehen sind. Wenn dadurch, dass der Fallstab 48 beispielsweise in die Aufnahmen 52 eingelegt wird, durch die dort vorhandenen Sensoren erfasst wird, dass das Rollo 40, insbesondere dessen heckseitiges Ende, in der unteren Position ist, überprüft die Steuerung, ob auch das frontseitige Ende des Rollos 40, d.h. die Rollokassette 42, in der in Fig. 3 dargestellten unteren Position ist. Ist dies nicht der Fall, wird der Elektromotor 44 betrieben, dass das Ritzel 55 in der Richtung gedreht wird, dass die Rollokassette 42 nach unten bewegt wird.

Eine entsprechende Arbeitsweise mit Drehung des Antriebsritzels 55 in der anderen Richtung erfolgt auch, wenn die Rollokassette 42 in der unteren in Fig. 3 dargestellten Position ist und der Fallstab 41 in die Aufnahmen 53 am Verdeckstoffhaltebügel 12 eingelegt wird. Dann wird die Rollokassette 42 durch Betreiben des Elektromotors 54 nach oben verfahren. In diesem Fall überprüft jedoch die Steuerung vorzugsweise vor dem Verfahren zusätzlich, ob das Verdeck 11 geschlossen ist. Nur im Falle eines geschlossenen Verdecks 11 wird die Bewegung ausgeführt. Andernfalls bleibt die Rollokassette 42 trotz des Einhängen des Fallstabs 41 in den Aufnahmen 53 am Verdeckstoffhaltebügel 12 in der unteren Position.

Grundsätzlich ist es auch möglich und vorteilhaft, eine Verdeckkastenanordnung 20 für ein Cabriolet-Fahrzeug 10 mit einer fahrzeugkarosseriefest anbringbaren Führungsanordnung 44, einer in der Führungsanordnung 44 zwischen zumindest einer ersten und einer zweiten Position verstellbar angeordneten Rollokassette 42 und einem aus der Rollokassette 42 ausziehbaren und in diese zurückziehbaren Rollo 40 ohne die Sensorik gemäß Anspruch 1 zu verwenden, wobei das Rollo 40 an seinem der Rollokassette 42 im ausgezogenen Zustand abgewandten Ende in Abhängigkeit von der Verstellposition der Rollokassette 42 in der Führungsanordnung 44 an zumindest zwei Orten der Fahrzeugkarosserie festlegbar ist. Die auf die Rolloanordnung gerichteten vorteilhaften Ausführungsformen, die hier beschrieben sind, können entsprechend verwendet werden.

## Patentansprüche

1. Verdeckkastenanordnung (27) für ein Cabriolet-Fahrzeug, enthaltend ein Bodenteil (20, 40), das an seinem frontseitigen Ende in einer Führungsanordnung (44, 45) zwischen zumindest zwei Positionen höhenverstellbar gelagert ist, und an seinem heckseitigen Ende (41) an zumindest zwei Positionen (52, 53) an der Fahrzeugkarosserie oder damit verbundenen Bauteilen verrastbar ist, wobei ein Sensor zum Erfassen der Position des heckseitigen Endes (41) des Bodenteils (20, 40) vorgesehen ist und zur Höhenverstellung des frontseitigen Endes (42) ein Antrieb (54) vorgesehen ist, der mit einer Steuerung zusammenwirkt, derart, dass in Abhängigkeit von der erfassten Position des heckseitigen Endes (41) des Bodenteils (20, 40) das frontseitige Ende (42) verfahren wird, so dass beide in der ersten Position oder beide in der zweiten Position sind.

2. Verdeckkastenanordnung (27) nach Anspruch 1,
**dadurch gekennzeichnet,**
**dass** das Bodenteil (20, 40) längenveränderlich in Fahrzeuglängsrichtung ist.

3. Verdeckkastenanordnung (27) nach Anspruch 1 oder 2,
**dadurch gekennzeichnet,**
**dass** das Bodenteil (20) durch ein in eine Rollokassette (42) aufwickelbares Rollo (40) gebildet ist, wobei die Rollokassette (42) das frontseitige Ende des Bodenteils bildet.

4. Verdeckkastenanordnung (27) nach Anspruch 3,
**dadurch gekennzeichnet,**
**dass** in der ersten Position das Rollo (42) am frontseitigen Endbereich eines Stoffhaltebügels (12) des Fahrzeugs (10) festlegbar ist.

5. Verdeckkastenanordnung (27) nach einem der vorhergehenden Ansprüche,
**dadurch gekennzeichnet,**
**dass** zur Verrastung des heckseitigen Endes (41) des Bodenteils (20, 40) Aufnahmen (52, 53) an der Fahrzeugkarosserie (50) oder damit verbundenen Bauteilen (12) in wenigstens zwei vertikalen Positionen vorgesehen sind und an den Aufnahmen Sensoren zum Erfassen des Vorhandenseins des heckseitigen Endes (41) des Bodenteils (20, 40) vorgesehen sind.

6. Verdeckkastenanordnung (27) nach Anspruch 5,
**dadurch gekennzeichnet,**
**dass** die Sensoren Mikroschalter oder Magnetschalter enthalten.

7. Verdeckkastenanordnung (27) nach einem der vorhergehenden Ansprüche,
**dadurch gekennzeichnet,**
**dass** das frontseitige Ende (42) und das heckseitige Ende (41) des Bodenteils (20, 40) jeweils in zwei vertikal beabstandeten Positionen (52, 53) festlegbar sind, wobei bei einer Festlegung beider Enden in der oberen Position das Bodenteil (20, 40)einen Sichtschutz in den Gepäckraum (16) bildet und bei einer Festlegung beider Enden in der unteren Position das Bodenteil (20, 40) den Boden eines Verdeckkastens (26) zur Aufnahme eines Cabriolet-Verdecks (11) bildet.

8. Verdeckkastenanordnung (27) nach Anspruch 7,
**dadurch gekennzeichnet,**
**dass** die Steuerung ein Verfahren des frontseitigen Endes (42) des Bodenteils (20, 40) aus der unteren Position in die obere Position nur erlaubt, wenn das Verdeck (11) geschlossen ist.

9. Verdeckkastenanordnung (27) nach einem der vorhergehenden Ansprüche,
**dadurch gekennzeichnet, dass** ein Elektromotor (54) zum Verfahren des frontseitigen Endes (42) des Bodenteils vorgesehen ist, der mit der Steuerung zusammenwirkt.

10. Verdeckkastenanordnung (27) nach einem der vorhergehenden Ansprüche,
**dadurch gekennzeichnet,**
**dass** die Führungsanordnung zwei zueinander parallele Führungsschienen (44) umfasst.

11. Cabrioletfahrzeug (10) mit einer Verdeckkastenanordnung (27) nach einem der vorhergehenden Ansprüche.

12. Cabrioletfahrzeug (10) nach Anspruch 10,
**dadurch gekennzeichnet,**
**dass** eine Steuerung für das Öffnen und Schließen des Verdecks (11) mit der Steuerung der Verdeckkastenanordnung (27) derart zusammenwirkt, dass ein Öffnen des Verdecks (11) nur erlaubt wird, wenn sich sowohl das frontseitige Ende (42) als auch das heckseitige Ende (41) des Bodenteils in einer abgesenkten Position befinden.

13. Cabriolet-Fahrzeug (10) nach einem der Ansprüche 11 bis 12,
**dadurch gekennzeichnet,**
**dass** die Führungsanordnung (44) an einem Überrollschutzsystem (30,34) des Fahrzeugs, insbesondere an einen Überrollbügel führenden Konsolen (34), festgelegt ist und im Wesentlichen in vertikaler Richtung verläuft.

14. Cabriolet-Fahrzeug (10) nach einem der Ansprüche 11 bis 12,
**dadurch gekennzeichnet,**
**dass** die Führungsanordnung (44) an einer den Gepäckraum (16) vom Fahrzeuginnenraum trennenden Wand (22) vorgesehen ist.

15. Cabriolet-Fahrzeug (10) nach einem der Ansprüche 11 bis 14, **dadurch gekennzeichnet, dass** die Rollokassette (42) und das Rollo (40) eine gebogene Kontur in einer Ansicht entlang der Bewegungsrichtung des Rollos (40) aufweisen.
